# EUROPEAN PATENT APPLICATION

(11) **EP 3 363 578 A1**
(43) Date of publication of application: **22.08.2018**
(21) Application number: 17156590.6
(22) Date of filing: 17.02.2017
(51) Int. Cl.: B23K 26/28, B23K 26/244, B23K 26/324, B23K 26/08, B29C 65/00, B65B 13/32, B41M 5/24, B23K 26/364, B23K 101/16, B23K 101/32, B23K 103/00

(54) **BINDING MACHINE AND METHOD FOR SECURING A PART OF A BINDING ELEMENT IN A LOOP AROUND ONE OR MORE OBJECTS**

(71) Applicant: Sund Birsta AB, 85125 Sundsvall (SE)
(72) Inventor: MÅRSTEDT, Peter, 113 60 Stockholm (SE); DANIELSSON, Erik, 852 30 Sundsvall (SE); ENGLUND, Ove, 113 60 Stockholm (SE)
(74) Representative: Bjerkéns Patentbyrå KB (Gävle)

(57) **Abstract**

A binding machine comprising:
- a feeding device for feeding a binding element (3) in the form of a wire or strap in a loop around one or more objects to be bound and subsequently retracting the binding element to draw it tightly around said objects; and
- a laser welding device for forming a welded joint between a section at the leading end of the binding element and an adjoining section at the trailing end of the part (3a) of the binding element fed in a loop around said objects to thereby secure this part of the binding element in a loop around the objects.

The laser welding device is configured to apply an identification marking on an outer surface of the binding element by means of a laser beam (14) emitted from a laser welding head of the laser welding device.

## Description

### FIELD OF THE INVENTION AND PRIOR ART

The present invention relates to a binding machine according to the preamble of claim 1. The invention also relates to a method according to the preamble of claim 12 for securing a part of an elongated binding element in a loop around one or more objects.

Automatic binding machines for applying a binding element in the form of a strap or wire in a loop around an object or a bundle of objects, drawing the binding element tightly around the object/bundle and thereafter joining overlapping sections of the binding element in order to secure the binding element around the object/bundle are known in many different configurations. US 6 403 917 B1 discloses a binding machine where a laser welding device is used for forming a welded joint between overlapping sections of a binding element in the form of a strap to thereby secure the binding element in a loop around an object or a bundle of objects.

There is often a desire to have the possibility to identify a specific object or bundle of objects at a later stage after the binding operation, for instance in order to establish the origin of the object or objects, the specific batch to which the object or objects belong, specific characteristics of the object or objects or other data related to the object or objects. This can be achieved by applying an identification marking on the object or objects or on the binding element. The identification marking may for instance have the form of a code consisting of graphic and/or alphanumeric symbols, wherein the code may be stored in a database associated with data related to the object or objects in question.

JP 2005-231658 A discloses a binding machine which comprises a sealing unit for securing a binding element in the form of a strap of metallic or plastic material in a loop around an object, and a separate laser printer for printing a predetermined marking on a surface of the binding element before the binding element is fed to the sealing unit.

### SUMMARY OF THE INVENTION

The object of the present invention is to achieve a new and favourable binding machine of the above-mentioned type.

According to the invention, this object is achieved by means of a binding machine having the features defined in claim 1.

The binding machine of the present invention comprises:
- a feeding device for feeding an elongated binding element in the form of a wire or strap in a loop around a space configured for receiving one or more objects to be bound and subsequently retracting the binding element to draw it tightly around one or more objects received in said space;
- a gripping device for gripping and locking a first binding element section at the leading end of the binding element after the feeding of a part of the binding element in a loop around said space; and
- a laser welding device for forming a welded joint between said first binding element section and an adjoining second binding element section at the trailing end of the part of the binding element fed in a loop around said space to thereby secure this part of the binding element in a loop around said one or more objects.

According to the invention, the laser welding device is also used for applying an identification marking on an outer surface of the binding element by means of a laser beam emitted from a laser welding head of the laser welding device. Hereby, no separate marking device or printer is required for marking the bounded object or objects, which will reduce the complexity of the binding machine. The identification marking may be applied on the binding element very rapidly immediately before or after the formation of the welded joint, and the complete binding sequence may thereby be performed in a rapid manner. Furthermore, an identification marking incised into the binding element by means of a laser beam constitutes a very durable marking which is fixed to the object/objects in a very reliable manner. The identification marking will remain on the object/objects as long as the binding element loop keeps the object/objects bounded and it will remain readable as long as the binding element loop is not subjected to severe damages.

According to an embodiment of the invention, the laser welding device is configured to form the welded joint as a lap joint with the second binding element section overlapping the first binding element section, wherein the laser welding device is configured to apply the identification marking on an outer surface of the second binding element section.

According to another embodiment of the invention, the laser welding device is configured to form the welded joint with a weld fusion zone extending in an endless path around a surface area on the second binding element section and across the entire thickness of the second binding element section, wherein the laser welding device is configured to apply the identification marking on the surface area on the second binding element section enclosed by the weld fusion zone. With this configuration of the welded joint, the weld fusion zone will prevent tensile stresses from being transmitted from the remaining part binding element loop to the area of the second binding element section enclosed by the weld fusion zone, which implies that the identification marking is applied on an area of the second binding element section which is subjected to negligible tensile stress. Thus, in this case, the local reduction of the tensile strength caused by the incised identification marking will have essentially no effect on the overall tensile strength of the binding element loop.

Another embodiment of the invention is characterized in:
- that the laser welding device is configured to cut off the binding element at said trailing end by means of a laser beam emitted from the laser welding head of the laser welding device to thereby release the part of the binding element fed in a loop around said space from the remaining part of the binding element, or
- that the laser welding device is configured to direct a laser beam onto an area across the binding element at the trailing end of the second binding element section in order to reduce the tensile strength of the binding element at the trailing end of the second binding element section, wherein the feeding device is configured to retract the binding element in order to subject said area to tensile stress and thereby cause the binding element to be broken off at the trailing end of the second binding element section.

Hereby, no separate cutting member is required for severing the binding element.

Further advantageous features of the binding machine according to the present invention will appear from the following description and the dependent claims.

The invention also relates to a method having the features defined in claim 12.

Further advantageous features of the method according to the present invention will appear from the following description and the dependent claims.

### BRIEF DESCRIPTION OF THE DRAWINGS

With reference to the appended drawings, a specific description of preferred embodiments of the invention cited as examples follows below. In the drawings:
- Fig 1: is an outline diagram of a binding machine according to a first embodiment of the present invention,
- Figs 2a-2h: are partly cut outline diagrams of parts included in the binding machine of Fig 1, as seen at different stages during the process of securing a binding element in a loop around an object,
- Fig 3a: is a schematic frontal view of a support member included in the binding machine of Fig 1, as seen with two jaws of the support member in an advanced supporting position,
- Fig 3b: is a schematic frontal view of the support member, as seen with the jaws of the support member in a retracted releasing position,
- Fig 4: is a planar view from above of a part of a binding element in the form of a strap secured in a loop around one or more objects to be bound, as seen before the binding element loop has been released from the remaining part of the binding element,
- Fig 5: is a planar view corresponding to Fig 4, as seen when the binding element loop has been released from the remaining part of the binding element,
- Fig 6: is a cut according to the line VI-VI in Fig 5,
- Fig 7: is a planar view from above of a part of a binding element in the form of a strap secured in a loop around one or more objects to be bound, as seen before the binding element loop has been released from the remaining part of the binding element,
- Fig 8: is a cut according to the line VIII-VIII in Fig 7,
- Fig 9: is a planar view from above of a part of a binding element in the form of a strap secured in a loop around one or more objects to be bound, as seen before the binding element loop has been released from the remaining part of the binding element,
- Fig 10: is a cut according to the line X-X in Fig 9,
- Fig 11: is a planar view from above of a part of a binding element in the form of a wire secured in a loop around one or more objects to be bound,
- Fig 12: is a planar view from above of a part of a binding element in the form of a strap secured in a loop around one or more objects to be bound, and
- Figs 13a-13g: are partly cut outline diagrams of parts included in a binding machine according to a second embodiment of the present invention, as seen at different stages during the process of securing a binding element in a loop around one or more objects.

### DETAILED DESCRIPTION OF EMBODIMENTS OF THE INVENTION

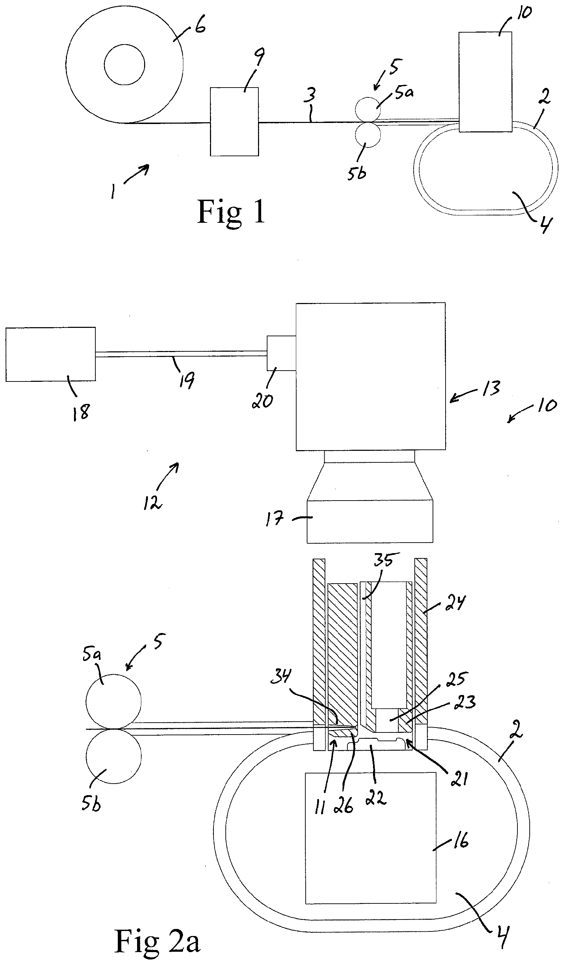

Some of the parts included in a binding machine 1 according to a first embodiment of the present invention are very schematically illustrated in Fig 1. The binding machine 1 comprises:
- a guide track 2 for guiding an elongated binding element 3 in the form of a wire or strap in a loop around a space 4 configured for receiving one or more objects to be bound;
- a feeding device 5 for feeding the binding element 3 from a supply coil 6, into said guide track 2 and along the guide track in a loop around said space 4 and subsequently retracting the binding element 3 to draw it tightly around one or more objects received in said space 4;
- an accumulator 9 for temporarily accumulating a part of the binding element 3 when the binding element is retracted by the feeding device 5 and then releasing the accumulated part of the binding element when the binding element thereafter is fed forwards by the feeding device 5; and
- a sealing unit 10 for securing the binding element 3 around said one or more objects.

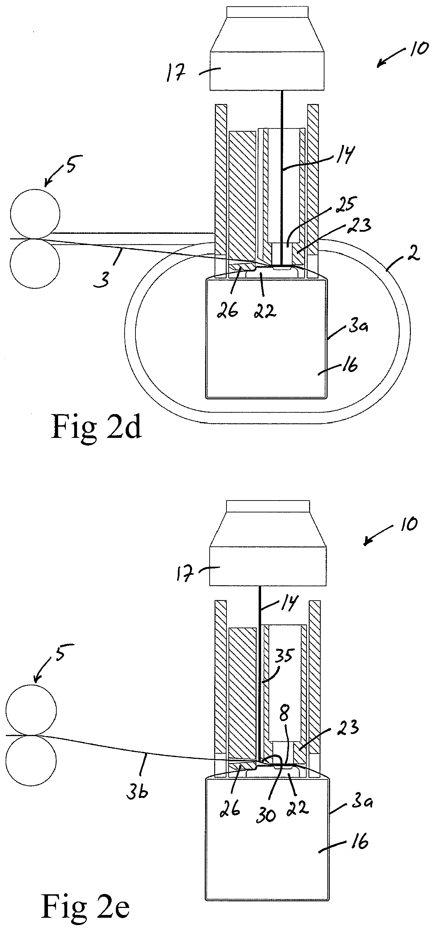

The guide track 2 may for instance have the form of a rail with a longitudinal opening facing said space 4. For the sake of clarity, the guide track 2 has been omitted in Figs 2e-2g.

In the illustrated embodiment, the feeding device 5 comprises two rotatable feed rollers 5a, 5b, which are located opposite each other and configured to be in contact with opposite sides of a part of the binding element 3 received in the nip between the feed rollers. At least one of the feed rollers 5a, 5b is rotatably driven by an actuator (not shown) in the form of a reversible drive motor in order to move the binding element 3 in its longitudinal direction. The drive motor is preferably an electric motor, but it could as an alternative be a hydraulic or pneumatic motor. The feeding device 5 may also comprise any other suitable type of actuator for feeding and retracting the binding element 3.

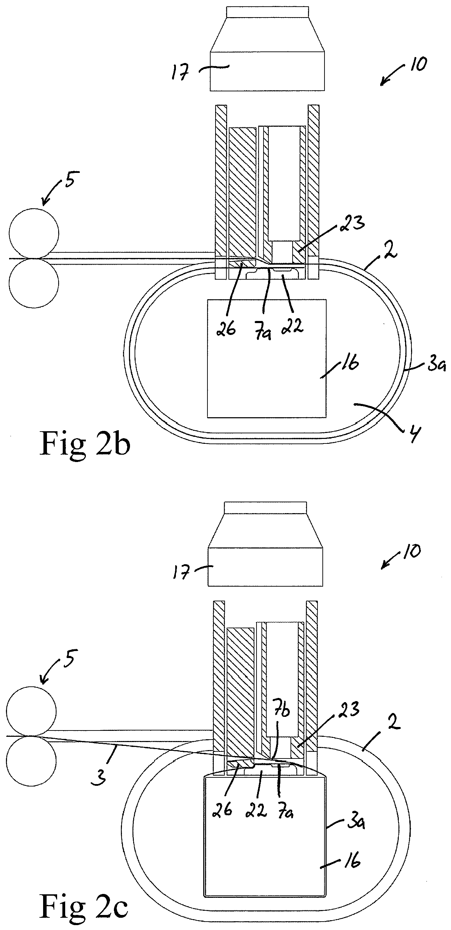

Some of the parts included in the above-mentioned sealing unit 10 are very schematically illustrated in Figs 2a-2h. The sealing unit 10 comprises:
- a gripping device 11 for gripping and locking a first binding element section 7a (see Figs 2b and 2c) at the leading end of the binding element after the feeding of a part 3a of the binding element in a loop around said space 4; and
- a laser welding device 12 (see Fig 2a) for forming a welded joint 8 (see Fig 2e-2h) between said first binding element section 7a and an adjoining second binding element section 7b at the trailing end of the part 3a of the binding element fed in a loop around said space 4 to thereby secure this part 3a of the binding element in a loop around said one or more objects.

The laser welding device 12 comprises a laser welding head 13, wherein said welded joint 8 between the first and second binding element sections 7a, 7b is formed by means of a laser beam 14 (see Fig 2d) emitted from the laser welding head.

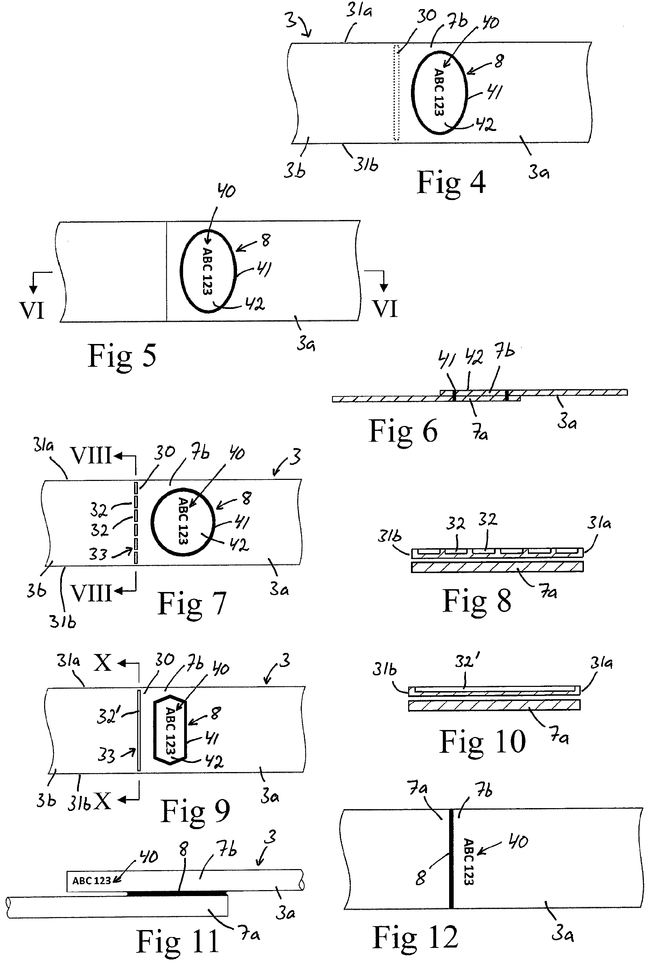

The laser welding device 12 is also configured to apply an identification marking 40 (see Figs 4, 5, 7, 9, 11 and 12) on an outer surface of the above-mentioned part 3a of the binding element by means of a laser beam 14 emitted from the laser welding head 13. The laser welding device 12 may be configured to form the identification marking 40 on the binding element 3 before the formation of the welded joint 8 or after the formation of the welded joint 8. The identification marking 40 may have the form of a code consisting of graphic and/or alphanumeric symbols, wherein the code preferably is stored in a database associated with data related to the bounded object or objects. The identification marking 40 is preferably applied on at least one of the first and second binding element sections 7a, 7b immediately before or after the formation of the welded joint 8.

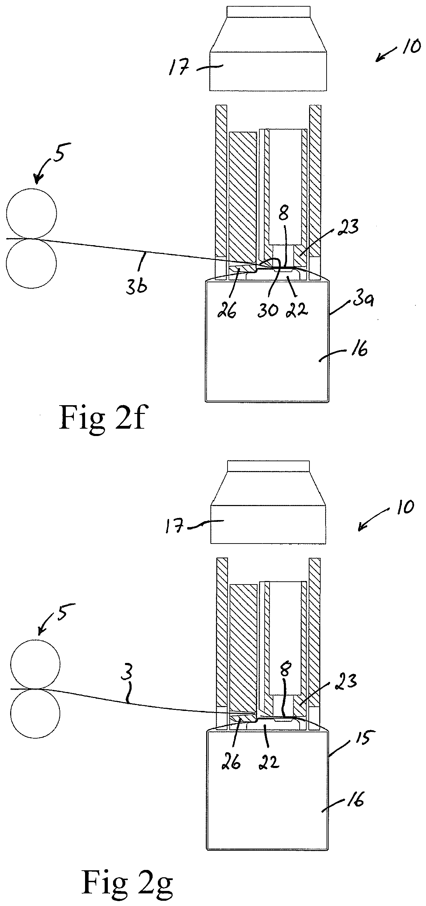

The laser welding device 12 may also be configured to direct a laser beam 14 (see Fig 2e) onto an area 30 (see Figs 4, 7 and 9) extending across the binding element 3 at the trailing end of the second binding element section 7b, i.e. at the end of the second binding element section 7b facing the feeding device 5, in order to reduce the tensile strength of the binding element 3 at the trailing end of the second binding element section 7b, wherein the feeding device 5 is configured to retract the binding element 3 in order to subject said area 30 to tensile stress and thereby cause the binding element to be broken off at the trailing end of the second binding element section 7b, as illustrated in Fig 2g. Hereby, the binding element loop 15 arranged around the object or objects 16 to be bound is released from the remaining part 3b of the binding element. As an alternative, the laser welding device 12 may be configured to cut off the binding element 3 at the trailing end of the second binding element section 7b by means of a laser beam 14 which cuts across the binding element 3 in the entire thickness thereof, to thereby release the part 3a of the binding element fed in a loop around said space 4 from the remaining part 3b of the binding element.

The laser welding head 13 may comprise one or more computer-controlled scanning mirrors for controlling the direction and movement of the laser beam 14 emitted from the laser welding head. As an alternative, the direction and movement of the laser beam 14 may be controlled by computer-controlled movements of the entire laser welding head 13. The laser welding head 13 is provided with a focusing lens 17, through which the laser beam 14 leaves the laser welding head.

The laser welding device 12 further comprises a laser source 18 for generating the laser power required for producing the laser beam 14 used for forming the welded joint 8 between the first and second binding element sections 7a, 7b, for applying the identification marking 40 on the binding element loop 15 and for releasing the binding element loop 15 from the remaining part 3b of the binding element. The laser source 18 can be of any type commonly used for welding. In the illustrated example, the laser source 18 is connected to the laser welding head 13 via an optical fibre cable 19, which is configured to guide the laser power generated by the laser source 18 to the laser welding head 13. The optical fibre cable 19 is in a conventional manner connected to the laser welding head 13 by means of an optical connector 20 comprising focusing optics. The focal point of the laser beam 14 emitted from the laser welding head 13 may be adjusted by computer-controlled movements of one or more optical members included in the focusing optics of the optical connector 20.

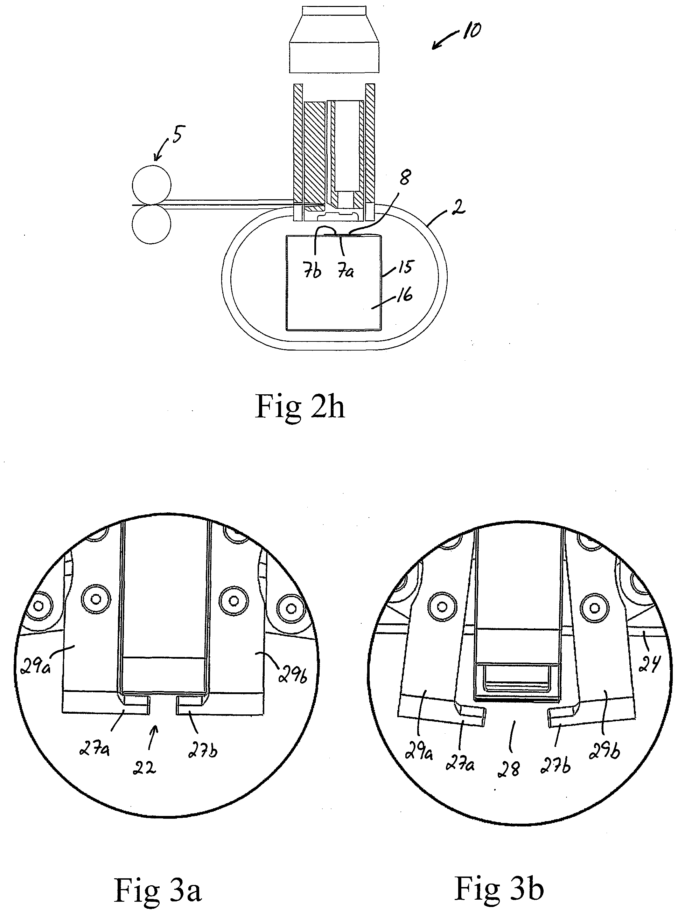

The sealing unit 10 illustrated in Figs 2a-2h comprises a squeezing device 21 for squeezing the second binding element section 7b against the first binding element section 7a with the second binding element section 7b overlapping the first binding element section 7a, wherein the squeezing device 21 is configured to keep the second binding element section 7b squeezed against the first binding element section 7a during the moment when the welded joint 8 between the first and second binding element sections 7a, 7b is formed and the identification marking 40 is applied on the binding element loop 15 by the laser welding device 12. In the illustrated example, the sealing unit 10 comprises a support member 22 for supporting the first binding element section 7a, and the squeezing device 21 comprises a squeezing member 23 which is configured to co-operate with the support member 22 and which is moveably mounted to a housing 24 of the sealing unit 10. The first and second binding element sections 7a, 7b are receivable in a space between the squeezing member 23 and the support member 22 and the squeezing member 23 is moveable in relation to the support member 22 between a retracted first position (see Figs 2a-2c and 2h), in which the squeezing member 23 is retracted from the support member 22, and an advanced second position (see Figs 2d-2g), in which the squeezing member 23 is pressed against the support member 22 in order to squeeze together the first and second binding element sections 7a, 7b. The squeezing member 23 is provided with a passage 25, through which a laser beam 14 from the laser welding head 13 of the laser welding device 12 may be directed towards an area on the second binding element section 7b, in order to form the welded joint 8 between the first and second binding element sections 7a, 7b and in order to apply the identification marking 40 on an outer surface of the second binding element section 7b, when the squeezing member 23 is in said second position and keeps the first and second binding element sections 7a, 7b squeezed together between the squeezing member 23 and the support member 22. The squeezing member 23 is moveable between said first and second positions by means of an actuator (not shown), which may be electrically, pneumatically or hydraulically driven.

In the sealing unit 10 illustrated in Figs 2a-2h, the gripping device 11 comprises a clamping member 26 which is moveably mounted to the housing 24. The clamping member 26 is moveable in relation to the support member 22 between a retracted position (see Figs 2a, 2b and 2h), in which the clamping member 26 is retracted from the support member 22 and allows the first binding element section 7a to pass between the clamping member 26 and the support member 22, and an advanced position (see Figs 2c-2g), in which the clamping member 26 is pressed against the support member 22 in order to grip and lock the first binding element section 7a between the clamping member 26 and the support member 22. The clamping member 26 is moveable between said retracted and advanced positions by means of an actuator (not shown), which may be electrically, pneumatically or hydraulically driven.

In the embodiment illustrated in Figs 2a-2h, there is a passage 35 between the squeezing member 23 and the clamping member 26, wherein a laser beam 14 from the laser welding head 13 of the laser welding device 12 may be directed towards the above-mentioned area 30 at the trailing end the second binding element section 7b through this passage 35.

As illustrated in Figs 3a and 3b, the support member 22 may comprise first and second support jaws 27a, 27b located opposite each other, wherein the support jaws 27a, 27b are moveable in relation to each other between an advanced supporting position (see Fig 3a), in which the support jaws 27a, 27b form a support for the first binding element section 7a, and a retracted releasing position (see Fig 3b), in which the support jaws 27a, 27b are retracted from each other in order to allow the first and second binding element sections 7a, 7b, after having been joined to each other, to pass through the gap 28 between the support jaws 27a, 27b. In the illustrated example, each support jaw 27a, 27b is fixed to a pivot arm 29a, 29b, which in its turn is pivotally mounted to the housing 24 of the sealing unit 10. Thus, in this case, the support jaws 27a, 27b are pivotable between the supporting and releasing positions. As an alternative, the support jaws could be linearly moveable between the supporting and releasing positions. The support jaws 27a, 27b are moveable between the supporting and releasing positions by means of an actuator (not shown), which may be electrically, pneumatically or hydraulically driven.

The gripping device 11 and the squeezing device 21 may of course also have any other suitable design in addition to the designs illustrated in Figs 2a-2h.

The laser welding device 12 may be configured to reduce the tensile strength of the binding element 3 at the trailing end of the second binding element section 7b by heating the above-mentioned area 30 at the trailing end of the second binding element section 7b under the effect of said laser beam 14 and without cutting or penetrating into the binding element 3. In order to heat the area 30 at the trailing end of the second binding element section 7b, the laser welding device 12 is configured to sweep the laser beam 14 over the area 30 (schematically illustrated with dotted lines in Fig 4), which extends between the longitudinal edges 31a, 31 b of the binding element 3. In order to make sure that the laser beam 14 will heat the area 30 in question without cutting into the binding element 3, the focal point of the laser beam 14 is adjusted, for instance by means of the above-mentioned focusing optics of the optical connector 20, in such a manner that the laser beam is out of focus when hitting the area 30 at the trailing end of the second binding element section 7b. When the area 30 has been rapidly heated by the laser beam 14, the feeding device 5 is operated to pull the binding element 3 backwards with such a force that the binding element 3, under the effect of the tensile stress produced in the binding element between the feeding device 5 and the second binding element section 7b, is broken off at the heated area 30, as illustrated in Fig 2g.

As an alternative, the laser welding device 12 may be configured to reduce the tensile strength of the binding element 3 at the trailing end of the second binding element section 7b by forming one or more depressions 32, 32' (see Figs 7-10) across the binding element 3 at the trailing end of the second binding element section 7b under the effect of the laser beam 14 so as to thereby provide a break line 33 across the binding element 3 at the trailing end of the second binding element section 7b. In this case, the laser beam 14 is made to cut into the binding element 3, but without cutting through it. The depressions 32, 32' may for instance have a depth corresponding to approximately half the thickness of the binding element 3. The laser beam 14 is preferably prevented from reaching any of the longitudinal edges 31a, 31 b of the binding element 3 when forming the depressions 32, 32'. The break line 33 may be formed by several shorter depressions 32 arranged in line with each other across the binding element 3 at the trailing end of the second binding element section 7b, as illustrated in Figs 7 and 8, or by one longer depression 32' extending across the binding element 3 at the trailing end of the second binding element section 7b, as illustrated in Figs 9 and 10. When the break line 33 has been formed by the laser beam 14, the feeding device 5 is operated to pull the binding element 3 backwards with such a force that the binding element 3, under the effect of the tensile stress produced in the binding element between the feeding device 5 and the second binding element section 7b, is broken off at the break line 33.

The binding machine 1 may have the form of a strapping machine, wherein the binding element 3 is a strap of metallic or plastic material. In this case, the laser welding device 12 may be configured to form the welded joint 8 as a lap joint (see Figs 5 and 6) with the second binding element section 7b overlapping the first binding element section 7a, or as a butt joint (see Fig 12) with an outer edge of the second binding element section 7b in contact with an opposite outer edge of the first binding element section 7a.

When the welded joint 8 is a lap joint formed on a binding element 3 in the form of a strap with the second binding element section 7b overlapping the first binding element section 7a, the laser welding device 12 is with advantage configured to apply the identification marking 40 on an outer surface of the second binding element section 7b. In this case, the laser welding device 12 is preferably configured to form the welded joint 8 with a weld fusion zone 41 (see Fig 4-6, 7 and 9) which extends in an endless path around a surface area 42 on the second binding element section 7b and across the entire thickness of the second binding element section 7b, wherein the laser welding device 12 is configured to apply the identification marking 40 on the surface area 42 on the second binding element section 7b enclosed by the weld fusion zone 41. The weld fusion zone 41 may for instance extend in an elliptical path (see Figs 4 and 5), a circular path (see Fig 7) or a polygonal path (see Fig 9) around said surface area 42 on the second binding element section 7b.

The binding machine 1 may also have the form of a wire binding machine, wherein the binding element 3 is a wire of metallic material. In this case, the laser welding device 12 may be configured to form the welded joint 8 as a longitudinal joint (see Fig 11) at the interface between the first and second binding element sections 7a, 7b, wherein the second binding element section 7b is located in parallel with and at the side of the first binding element section 7a, or as a butt joint.

An operating sequence for securing a binding element 3 in the form of a strap in a loop around an object 16 by means of the above-described binding machine 1 will now be described with reference to Figs 2a-2h. In the embodiment illustrated in Figs 2a-2h, the laser welding device 12 is configured to form the welded joint 8 as a lap joint with the second binding element section 7b overlapping the first binding element section 7a.

In a first step, a motor of the feeding device 5 is operated in a first direction in order to feed the binding element 3 forwards from the supply coil 6, through a passage 34 (see Fig 2a) in the clamping member 26 and into the guide track 2. During the feeding of the binding element 3, the clamping member 26 is in its retracted position, the squeezing member 23 in its retracted first position and the support jaws 27a, 27b in the supporting position. The binding element 3 is fed forwards in the guide track 2 in a loop around the object 16. The leading end of the binding element 3 will then leave the guide track 2 and pass through the gap between the clamping member 26 and the support member 22 (see Fig 2b), whereupon the leading end of the binding element 3 actuates a stop member (not shown) and the motor of the feeding device 5 is stopped. The clamping member 26 is then moved to its advanced position in order to grip the first binding element section 7a at the leading end of the binding element 3 to thereby lock the first binding element section 7a between the clamping member 26 and the support member 22. Thereafter, the motor of the feeding device 5 is reversed in order to pull the binding element 3 backwards and thereby tighten the binding element 3 around the object 16, as illustrated in Fig 2c. As illustrated in Figs 2b and 2c, the sealing unit 10 is moveable in relation to the guide track 2 and configured to move towards the object 16 when the binding element 3 is tightened around the object. When the binding element 3 has been drawn tightly around the object 16, the motor of the feeding device 5 is stopped and the squeezing member 23 is moved to its advanced second position in order to squeeze together the first and second binding element sections 7a, 7b between the squeezing member 23 and the support member 22 (see Fig 2d). The laser welding device 12 is then operated to focus a laser beam 14 onto the mutually overlapping binding element sections 7a, 7b in order to form a welded joint 8 between the binding element sections 7a, 7b and in order to apply an identification marking on the second binding element section 7b. The binding element 3 is thereby secured in a loop around the object 16 and provided with a durable identification marking in a rapid and reliable manner. Thereafter, the laser welding device 12 is operated to direct a laser beam 14 onto an area 30 across the binding element 3 at the trailing end of the second binding element section 7b in order to reduce the tensile strength of the binding element 3 at the trailing end of the second binding element section 7b, as illustrated in Fig 2e. The part of the binding element extending between the squeezing member 23 and the feeding device 5 is with advantage held in a slacked state during the moment when the laser beam 14 is directed onto said area 30. Thereafter, the feeding device 5 is configured to retract the binding element 3 (see Fig 2f) in order to subject said area 30 to tensile stress and thereby cause the binding element to be broken off at the trailing end of the second binding element section 7b, as illustrated in Fig 2g. Finally, the clamping member 26 is returned to its retracted position and the squeezing member 23 to its retracted first position, whereupon the support jaws 27a, 27b are moved to the releasing position in order to release the binding element loop 15 from the sealing unit 10.

An operating sequence similar to the operating sequence described above may be used for securing a binding element 3 in the form of a metallic wire in a loop around one or more objects. In the latter case, the second binding element section 7b is guided into a position in parallel with and at the side of the first binding element section 7a, and the squeezing member 23 is replaced by a clamping member which is configured to keep the first and second binding element sections 7a, 7b in a fixed position close to each other when the laser beam is directed onto the interface between the first and second binding element sections 7a, 7b.

When the binding element 3 is of steel or other metallic material, the intended welding area on the first and second binding element sections 7a, 7b is with advantage preheated by means of a laser beam emitted from the laser welding head 13 of the laser welding device 12 before the formation of the welded joint 8. The welding area is preferably preheated to such a temperature that possible layers of paint and/or wax on the first and second binding element sections 7a, 7b are removed by vaporization at the intended welding area. The pre-heating temperature is preferably also so adapted that the metallic material of the first and second binding element sections 7a, 7b is subjected to metallurgical changes which result in improved welding conditions.

When the binding element 3 is of steel or other metallic material, the welding area on the first and second binding element sections 7a, 7b is with advantage also postheated by means of a laser beam emitted from the laser welding head 13 of the laser welding device 12 after the formation of the welded joint 8, wherein the post-heating temperature is so adapted that the metallic material of the first and second binding element sections 7a, 7b is subjected to metallurgical changes which influence the strength of the welded joint 8 in a favourable manner.

In order to make sure that the laser beam will heat the welding area without cutting into the binding element 3 in connection with the pre-heating and post-heating, the focal point of the laser beam is adjusted, for instance by means of the above-mentioned focusing optics of the optical connector 20, in such a manner that the laser beam is out of focus when hitting the first and/or second binding element section 7a, 7b during the pre-heating step and the post-heating step. When the welded joint 8 is formed as a lap joint, the pre-heating and post-heating laser beam is directed onto an outer surface of the second binding element section 7b, wherein heat energy is transmitted from the second binding element section 7b to the first binding element section 7a by thermal conduction.

The quality of the welded joint 8 and/or the identification marking 40 is with advantage supervised by means of a camera and suitable image processing technique.

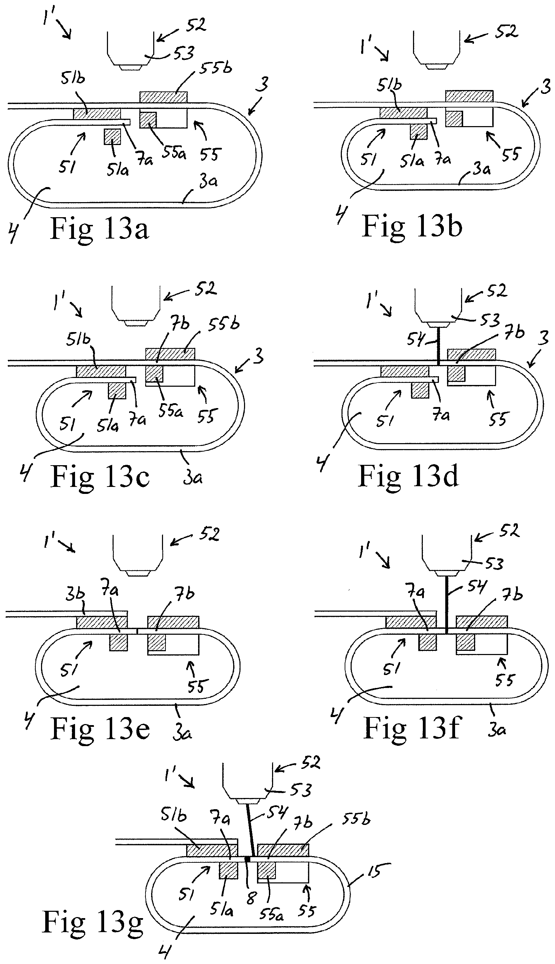

Some of the parts included in a binding machine 1' according to a second embodiment of the invention are very schematically illustrated in Figs 13a-13g. This binding machine 1' comprises:
- a guide track (not shown) for guiding an elongated binding element 3 in the form of a wire or strap in a loop around a space 4 configured for receiving one or more objects to be bound;
- a feeding device (not shown) for feeding the binding element 3 into said guide track and along the guide track in a loop around said space 4 and subsequently retracting the binding element 3 to draw it tightly around one or more objects received in said space 4;
- a first gripping device 51 for gripping and locking a first binding element section 7a at the leading end of the binding element after the feeding of a part 3a of the binding element in a loop around said space 4; and
- a laser welding device 52 for forming a welded joint 8 (see Fig 13g) between said first binding element section 7a and an adjoining second binding element section 7b at the trailing end of the part 3a of the binding element fed in a loop around said space 4 to thereby secure this part 3a of the binding element in a loop around said one or more objects.

The laser welding device 52 comprises a laser welding head 53, wherein said welded joint 8 is formed by means of a laser beam 54 emitted from the laser welding head. The laser welding device 52 is also configured to apply an identification marking 40 (see Fig 12) on an outer surface of the above-mentioned part 3a of the binding element by means of a laser beam 54 emitted from the laser welding head 53. The laser welding device 52 may be configured to form the identification marking 40 on the binding element 3 before the formation of the welded joint 8 or after the formation of the welded joint 8. The laser welding device 52 is preferably also configured to cut off the binding element 3 at said trailing end by means of a laser beam 54 emitted from the laser welding head 53 to thereby release the part 3a of the binding element fed in a loop around said space 4 from the remaining part 3b of the binding element.

In the embodiment illustrated in Figs 13a-13g, the binding machine 1' also comprises a second gripping device 55 for gripping said second binding element section 7b when the binding element 3 has been draw tightly around said one or more objects. The first and second gripping devices 51, 55 are moveable in relation to each other to thereby allow said first and second binding element sections 7a, 7b to be mutually moved from a cutting position (see Figs 13c and 13d), in which the first and second binding element sections 7a, 7b are at a distance from each other, to a welding position (see Figs 13e and 13f), in which the first and second binding element sections 7a, 7b are in contact with each other. The laser welding device 52 is configured to cut off the binding element 3 at said trailing end when the first and second binding element sections 7a, 7b are held in said cutting position by the first and second gripping devices 51, 55, and to form the welded joint 8 when the first and second binding element sections 7a, 7b are held in said welding position by the first and second gripping devices 51, 55.

In the embodiment illustrated in Figs 13a-13g, the first gripping device 51 is mounted so as to be stationary in relation to a frame (not shown) of the binding machine 1', whereas the second gripping device 55 is moveably mounted to said frame so as to be moveable in relation to the first gripping device 51 and thereby allow the first and second binding element sections 7a, 7b to be positioned in said welding position by a movement of the second binding element section 7b towards the first binding element section 7a. As an alternative, the second gripping device 55 could be mounted so as to be stationary in relation to the frame of the binding machine 1' and the first gripping device 51 moveably mounted to said frame so as to be moveable in relation to the second gripping device 55 and thereby allow the first and second binding element sections 7a, 7b to be positioned in said welding position by a movement of the first binding element section 7a towards the second binding element section 7b. As a further alternative, the first and second gripping devices 51, 55 could both be moveably mounted to the frame of the binding machine 1' and thereby allow the first and second binding element sections 7a, 7b to be positioned in said welding position by a simultaneous movement of the first and second binding element sections 7a, 7b towards each other.

In the illustrated example, the first gripping device 51 comprises a clamping member 51a and an associated base member 51 b, wherein the clamping member 51a is moveable in relation to the base member 51 b between a releasing position (see Fig 13a), in which the binding element 3 is free to pass through an interspace between the clamping member 51a and the base member 51 b, and a clamping position (see Figs 13b-13g), in which the first binding element section 7a is clamped between the clamping member 51a and the base member 51 b. In the illustrated example, also the second gripping device 55 comprises a clamping member 55a and an associated base member 55b, wherein the clamping member 55a is moveable in relation to the base member 55b between a releasing position (see Figs 13a and 13b), in which the binding element 3 is free to pass through an interspace between the clamping member 55a and the base member 55b, and a clamping position (see Figs 13c-13g), in which the second binding element section 7b is clamped between the clamping member 55a and the base member 55b. The gripping devices 51, 55 may of course also be designed in any other suitable manner.

In the embodiment illustrated in Figs 13a-13g, the laser welding device 52 is configured to cut off the binding element 3 at said trailing end in a first step (see Fig 13d) and thereafter form the welded joint 8 between the first and second binding element sections 7a, 7b in a subsequent second step (see Fig 13f). In this case, the welded joint 8 between the first and second binding element sections 7a, 7b is formed as a butt joint, with an outer edge of the second binding element section 7b in contact with an opposite outer edge of the first binding element section 7a. In a third step (see Fig 13g), the laser welding device 52 is configured to form the desired identification marking on the binding element loop 15.

The binding machine 1' may have the form of a strapping machine, wherein the binding element 3 is a strap of metallic or plastic material. As an alternative, the binding machine 1' may have the form of a wire binding machine, wherein the binding element 3 is a wire of metallic material.

An operating sequence for securing a binding element 3 in a loop around an object or a bundle of objects (not shown) by means of the above-described binding machine 1' will now be described with reference to Figs 13a-13g.

In a first step, a motor of the feeding device is operated in a first direction in order to feed a binding element 3 forwards from a supply coil, through the second gripping device 55 and into the above-mentioned guide track. The binding element 3 is fed forwards in the guide track in a loop around the space 4. The leading end of the binding element 3 will then leave the guide track and pass through the first gripping device 51 (see Fig 13a), whereupon the leading end of the binding element 3 actuates a stop member and the motor of the feeding device is stopped. The clamping member 51a of the first gripping device 51 is then displaced to grip the first binding element section 7a at the leading end of the binding element 3 to thereby lock the first binding element section 7a to the first gripping device 51. An object or a bundle of objects is feed into the space 4, for instance by means of a conveyor (not shown). Thereafter, the motor of the feeding device is reversed in order to pull the binding element 3 backwards and thereby tighten the binding element 3 around the object/objects, as illustrated in Fig 13b. When the binding element 3 has been drawn tightly around the object/objects, the motor of the feeding device is stopped and the clamping member 55a of the second gripping device 55 is displaced to grip the second binding element section 7b to thereby lock the second binding element section 7b to the second gripping device 55 (see Fig 13c). The laser welding device 52 is then operated to focus a laser beam 54 onto the second binding element section 7b (see Fig 13d) in order to cut off the binding element 3 and thereby release the part 3a of the binding element fed in a loop around said space 4 from the remaining part 3b of the binding element. Thereafter, the motor of the feeding device is actuated in order to pull said remaining part 3b of the binding element a short distance backwards from the position illustrated in Fig 13d to the position illustrated in Fig 13e, whereupon the second gripping device 55 is moved from the position illustrated in Fig 13d to the position illustrated in Fig 13e so as to thereby bring the outer end of the second binding element section 7b into contact with the outer end of the first binding element section 7a. The laser welding device 52 is then operated to focus a laser beam 54 onto the joint between the first and second binding element sections 7a, 7b (see Fig 13f) in order to form a welded joint 8 between the first and second binding element sections 7a, 7b (see Fig 13g) and thereby secure the binding element in a loop around the object/objects to be bound. Thereafter, the laser welding device 52 is operated to focus a laser beam 54 onto the first or second binding element section 7a, 7b (see Fig 13g) in order to form an identification marking on the binding element loop 15. The clamping members 51 a, 55a are then moved away from the respective base member 51 b, 55b to thereby allow the binding element loop 15 to be released from the gripping devices 51, 55.

The invention is of course not in any way restricted to the embodiments described above. On the contrary, many possibilities to modifications thereof will be apparent to a person with ordinary skill in the art without departing from the basic idea of the invention such as defined in the appended claims. The binding machine according to the present invention may for instance be design for co-operation with a compacting machine in order to bind a coil of wire compacted by the compacting machine. In the latter case, several sealing units are mounted to the compacting machine and used simultaneously in order to apply binding element loops at different positions around the compacted coil of wire, wherein each binding element loop extends along the inside of the coil through a central axial opening therein and along the outside of the coil.

## Claims

1. A binding machine comprising:
- a feeding device (5) for feeding an elongated binding element (3) in the form of a wire or strap in a loop around a space (4) configured for receiving one or more objects (16) to be bound and subsequently retracting the binding element (3) to draw it tightly around one or more objects (16) received in said space (4);
- a gripping device (11; 51) for gripping and locking a first binding element section (7a) at the leading end of the binding element after the feeding of a part (3a) of the binding element in a loop around said space (4); and
- a laser welding device (12; 52) for forming a welded joint (8) between said first binding element section (7a) and an adjoining second binding element section (7b) at the trailing end of the part (3a) of the binding element fed in a loop around said space (4) to thereby secure this part (3a) of the binding element in a loop around said one or more objects (16),
**characterized in that** the laser welding device (12; 52) is configured to apply an identification marking (40) on an outer surface of the binding element (3) by means of a laser beam (14; 54) emitted from a laser welding head (13; 53) of the laser welding device.

2. A binding machine according to claim 1, **characterized in that** the laser welding device (12; 52) is configured to apply the identification marking (40) on at least one of the first and second binding element sections (7a, 7b).

3. A binding machine according to claim 1 or 2, **characterized in that** the binding machine (1; 1') is a strapping machine, wherein the binding element (3) is a strap of metallic or plastic material.

4. A binding machine according to claim 3, **characterized in that** the laser welding device (12) is configured to form the welded joint (8) as a lap joint with the second binding element section (7b) overlapping the first binding element section (7a), wherein the laser welding device (12) is configured to apply the identification marking (40) on an outer surface of the second binding element section (7b).

5. A binding machine according to claim 4, **characterized in:**
- **that** the laser welding device (12) is configured to form the welded joint (8) with a weld fusion zone (41) extending in an endless path around a surface area (42) on the second binding element section (7b) and across the entire thickness of the second binding element section (7b); and
- **that** the laser welding device (12) is configured to apply the identification marking (40) on the surface area (42) on the second binding element section (7b) enclosed by the weld fusion zone (41).

6. A binding machine according to claim 5, **characterized in that** the laser welding device (12) is configured to form the welded joint (8) with a weld fusion zone (41) extending in a circular or elliptical path around said surface area (42) on the second binding element section (7b).

7. A binding machine according to any of claims 3-6, **characterized in that** the binding machine (1) comprises a squeezing device (21) for squeezing the second binding element section (7b) against the first binding element section (7a) with the second binding element section (7b) overlapping the first binding element section (7a), wherein the squeezing device (21) is configured to keep the second binding element section (7b) squeezed against the first binding element section (7a) during the moment when the welded joint (8) between the first and second binding element sections (7a, 7b) is formed and the identification marking (40) is applied on the second binding element section (7b) by the laser welding device (12).

8. A binding machine according to claim 7, **characterized in:**
- **that** the binding machine (1) comprises a support member (22) for supporting the first binding element section (7a);
- **that** the squeezing device (21) comprises a squeezing member (23) which is configured to co-operate with the support member (22), wherein the first and second binding element sections (7a, 7b) are receivable in a space between the squeezing member (23) and the support member (22) and wherein the squeezing member (23) is moveable in relation to the support member (22) between a retracted first position, in which the squeezing member (23) is retracted from the support member (22), and an advanced second position, in which the squeezing member (23) is pressed against the support member (22) in order to squeeze together the first and second binding element sections (7a, 7b); and
- **that** the squeezing member (23) is provided with a passage (25), through which a laser beam (14) from the laser welding head (13) of the laser welding device (12) may be directed towards an area on the second binding element section (7b) when the squeezing member (23) is in said second position and keeps the first and second binding element sections (7a, 7b) squeezed together between the squeezing member (23) and the support member (22).

9. A binding machine according to claim 1 or 2, **characterized in that** the binding machine (1; 1') is a wire binding machine, wherein the binding element (3) is a wire of metallic material.

10. A binding machine according to any of claims 1-9, **characterized in that** the laser welding device (12; 52) is configured to cut off the binding element (3) at said trailing end by means of a laser beam (14; 54) emitted from the laser welding head (13; 53) of the laser welding device to thereby release the part (3a) of the binding element fed in a loop around said space (4) from the remaining part (3b) of the binding element.

11. A binding machine according to any of claims 1-9, **characterized in that** the laser welding device (12) is configured to direct a laser beam (14) onto an area (30) across the binding element (3) at the trailing end of the second binding element section (7b) in order to reduce the tensile strength of the binding element (3) at the trailing end of the second binding element section (7b), wherein the feeding device (5) is configured to retract the binding element (3) in order to subject said area (30) to tensile stress and thereby cause the binding element to be broken off at the trailing end of the second binding element section (7b).

12. A method for securing a part (3a) of an elongated binding element (3) in a loop around one or more objects, wherein the method comprises the steps of:
- positioning said one or more objects in an object receiving space (4) of a binding machine (1; 1');
- feeding the binding element (3) in a loop around said space (4);
- gripping and locking a first binding element section (7a) at the leading end of the binding element after the feeding of a part (3a) of the binding element in a loop around said space (4);
- retracting the binding element (3) to draw it tightly around said one or more objects; and
- forming, by means of a laser welding device (12; 52) included in the binding machine (1; 1'), a welded joint (8) between said first binding element section (7a) and an adjoining second binding element section (7b) at the trailing end of the part (3a) of the binding element fed in a loop around said space (4) to thereby secure this part (3a) of the binding element in a loop around said one or more objects,
**characterized in that** an identification marking (40) is applied on an outer surface of the binding element (3) by means of a laser beam (14; 54) emitted from a laser welding head (13; 53) of the laser welding device (12; 52).

13. A method according to claim 12, **characterized in that** the identification marking (40) is applied on at least one of the first and second binding element sections (7a, 7b).

14. A method according to claim 13, **characterized in that** the welded joint (8) is formed as a lap joint with the second binding element section (7b) overlapping the first binding element section (7a), wherein the identification marking (40) is applied on an outer surface of the second binding element section (7b).

15. A method according to claim 14, **characterized in:**
- **that** the welded joint (8) is formed with a weld fusion zone (41) extending in an endless path around a surface area (42) on the second binding element section (7b) and across the entire thickness of the second binding element section (7b); and
- **that** the identification marking (40) is applied on the surface area (42) on the second binding element section (7b) enclosed by the weld fusion zone (41).
